# EUROPEAN PATENT APPLICATION

(11) **EP 2 546 210 A2**
(43) Date of publication of application: **16.01.2013**
(21) Application number: 12176477.3
(22) Date of filing: 13.07.2012
(51) Int. Cl.: C04B 26/00, C04B 26/04, C04B 26/26, C04B 28/04

(54) **Material for absorption and attenuation of radiations**

(30) Priority: 15.07.2011 ES 201131219
(71) Applicant: Arraela S.L., 15623 La Coruna (ES)
(72) Inventor: Caruncho Rodado, Juan Manuel, 15623 LA CORUÑA (ES)
(74) Representative: Del Valle Valiente, Sonia

(57) **Abstract**

Products for obtaining masses for pouring, bricks, tiles and any other format are achieved, in which participate aggregates and asphaltic binders, as well as also additives for regulating the process. The invention achieves a remarkable increase in the capacity of neutrons, X-rays and/or photons radiation protection, and for this the use of asphaltic hydrocarbon as binder has been envisaged, while as aggregate is used Colemanite in absorption and attenuation of neutrons, Barite in the case of X-rays and Magnetite, Hematite and/or Steel shot in the case of photons.

## Description

### OBJECT OF THE INVENTION

The present invention relates to a mass, specially designed for the manufacture of high-capacity of radio-protection products, such as mass material, bricks, brick strips and/or special shapes.

The object of the invention is to achieve a mass with high homogeneity, with an optimum barrier effect against diverse kinds of radiation and diverse energy, allowing a marked reduction of the thickness of shielding barriers against standard materials to achieve the same barrier effect to said radiations.

Another object of the invention in one of its claims is to cause and/or accentuate the effect of neutron absorption and simultaneously the "capture" effect in their various energies by this material, and to eliminate or significantly reduce the effect of neutron scattering in enclosed facilities (scatter), which in the case of the bunkers for cancer treatment, it would mean that the patient would only receive the neutrons received directly from the main beam directly, eliminating those received by scatter effect. The electronics and room control systems are also benefited by this fact, as well as a significant reduction in the shielding of the bunker door, among other beneficial aspects.

The invention is applicable to any system of radiological protection, such as containers and/or mobile barriers of radioactive facilities, radiotherapy bunkers, or any facility where the existence of radioactive particles is expected, and where structural capacity is not required.

### BACKGROUND OF THE INVENTION

Concrete with capacity of radio-protection have, in addition to the usual cement components, water and chemical additives which vary according to the characteristics intended for them, such as resistance, setting time, protection against freezing, assurance of the absence of cracking, marine environment, etc., and an aggregate that distinguishes them from conventional concrete.

The problem posed by this type of concrete is that in order to provide good radio-protection properties, it is necessary to have a considerable wall thickness, with the consequent and negative impact on weight, space, and cost, since the hydrogen content in the same is usually low.

Trying to avoid this problem, the Invention Patent with Application Number P 200900481 and publication number ES 2 344 290 is known, which describes a mass for the manufacture of products with high capacity of neutron radio-protection, mass that the same as any conventional concrete, is structured based on cement, aggregates, water and chemical additives that change the characteristics of the concrete, with the particularity that said mass uses as aggregate Colemanite with a very continuous grain size to achieve a perfect homogeneity in mass, determinant of a barrier effect against neutron radiation, which allows to significantly reduce the wall thickness without diminishing the barrier effect.

More specifically, said Patent envisaged the use of Portland cement, water, Colemanite and additives.

The patents of invention P200703404 and P200601392 provide similar effects for other particles and energies, and using another type of aggregates for X-rays and high energy Photons, respectively.

It would undoubtedly be desirable to continue to improve these results.

### DESCRIPTION OF THE INVENTION

The material for absorption and attenuation of radiations proposed by the invention constitutes a new step forward in this technological field, with clearly improved results against the Patents of Invention mentioned above.

For this, more specifically, and in accordance with one of the features of the invention, the classic Portland cement, or in its case the Alumina cement used up to now, is replaced by an asphalt binder consisting of a mixture of hydrocarbons such as asphaltene, paraffin, olefins, naphthenic, aromatic, etc.

Polymers can be added to these asphalt binders, when it is desired to increase the working range of the product in temperature terms, so it is higher, thereby losing the consistency.

Asphaltic materials are characterized, inter alia, in that their hydrogen and carbon content is very high, and this is a very convenient situation for the construction of neutron shields.

As a means for neutron capture and absorption, the use of Colemanite (Ca₂B₆O₁₁ 5H₂O) as aggregate is shown, which is a borate calcium, which is very effective in neutron attenuation due to its boron and hydrogen content.

It has also been envisaged Colemanite to have a very continuous grain size, which on the other hand can be variable depending if the mass is intended to be poured, for the manufacture of bricks or for the manufacture of tiles.

Said particle size shall be comprised between 0 mm and 35 mm for obtaining poured mass, between 0 mm and 12 mm for obtaining bricks, and between 0 and 8 mm for the tiles, which features can vary both in positive sense and in negative sense in magnitudes of the order of 25%, depending on the dimensions of the final product.

From the suitable combination between aggregates and asphalt binder, is derived a significant increase in the number of molecules of hydrogen, very effective for neutron capture, primarily fast neutrons, absorbing them or thermalizing them, these thermal neutrons being the ones that are captured by the boron contained in the mixture.

For shielding and/or attenuation of X-rays, energies of up to about 500 KeV, energy range where the photoelectric effect predominates, the utilization of Barite (BaSO₄) as aggregate has been envisaged, since due to the atomic structure of the main component of the aggregate used, barium is more effective than other aggregate components with lower Z, in the shielding effect which is intended to be generated. Since the photoelectric absorption cross section is proportional in first approximation to Z⁵, i.e., heavily dependent on the Atomic Number of the absorbent material, 56 in the case of barium, main component of Barite, its utilization as basis of this product is optimal.

For high energy photons, above 500-600 KeV, which are subjected to the Compton effect, where the mass is a fundamental aspect for the attenuation and absorption of these particles, the use of minerals such as magnetite, hematite and even inclusion of steel shot has been envisaged, reaching densities of 4.3 Kg/dm³ on a regular basis, (± 15%), without the addition of shot, using the same hydrocarbon as a binder.

Finally, it has been verified experimentally that in some cases, for instance in mixtures corresponding to specific shields against neutrons, X-Rays under 500 / 700 KeV and Gamma-Rays above this intensity, and with regard to the main aggregates in the composition of the different corresponding materials, the presence of trapped air in the composition is possible depending of the type of asphaltic product and production method used, in which case, it has been envisaged adding to the mixture a "filler" of the same kind than the main aggregate of the composition, in an amount that may reach up to 10-15 % of the total weight of the aggregate used.

In the hypothetical case of not having this "filler" available during the production phase, Portland cement could be added, below these limits, monitoring very closely the densities and the trapped air, as well as the eventual effects on the physical qualities of the produced sample.

### EXAMPLES OF PREFERRED EMBODIMENT OF THE INVENTION

### Example 1.-

In a practical embodiment of the product developed especially for specifically the neutron shielding, the following mixture has been prepared provided in % by volume and % by weight:

| Components | % Volume | % Weight |
|---|---|---|
| Hydrocarbons | 14.5 | 8 |
| Colemanite | 85.5 | 92 |

These figures may vary ± 15 % according to the production processes to be used, fraction of aggregate to be used and objectives of priority weight such as radiation protection coefficients, mechanical strength of the mass, cracking, etc.

Mineral filler can be added up to a ratio of 1: 1.5 of the hydrocarbon weight based on the changes of performance intended for the mass, such as fluidity, consistency, resistance, elasticity, etc.

Density is not a parameter pursued in a specific way, and will be the result of the optimization of the mixture; however it will be around 1.86 Kg/dm³.

### Example 2.-

In a practical embodiment of the product developed especially for specifically the shielding against X-rays, the following mixture has been prepared provided in % by volume and % by weight.

| Components | % Volume | % Weight |
|---|---|---|
| Hydrocarbons | 14.8 | 4.13 |
| Barite | 85.52 | 95.87 |

These figures may vary ± 15 % according to the production processes to be used, fraction of aggregate to be used and objectives of priority weight such as radiation protection coefficients, mechanical strength of the mass, cracking, etc.

Mineral filler can be added up to a ratio of 1:3 of the hydrocarbon weight to cause the physical changes mentioned above.

The densities obtained are around 3.68 Kg/dm³.

### Example 3.-

In a practical embodiment of the product developed especially for specifically the high-energy photon shielding, the following mixture has been prepared provided in % by volume and % by weight.

| Components | % Volume | % Weight |
|---|---|---|
| Hydrocarbons | 14.47 | 3.5 |
| Magnetite, (*) | 85.53 | 96.5 |

| | | |
|---|---|---|
| (*) Hematite, steel shot. In the case of the steel shot, since it has more density than magnetite and/or Hematite, the % by weight in the sample will be modified based on its participation in the same, maintaining the % by volume expressed. | | |

These figures may vary ± 15 % according to the production processes to be used, fraction of aggregate to be used and objectives of priority weight such as radiation protection coefficients, mechanical strength of the mass, cracking, etc.

Mineral filler can be added up to a ratio of 1:4 of the hydrocarbon weight to cause the physical changes mentioned above.

The densities obtained are around 4.25 Kg/dm³. This density may be higher based on the incorporation of steel shot.

It should be noted finally that there is usually presence of neutrons at high energies, and that the high content of hydrogen of this product makes it particularly effective in this aspect of versatility in terms of radiation protection.

## Claims

1. ^{a}.- Material for absorption and attenuation of radiations, for different types of particles and energies, of the type of those including an aggregate and a binder, as well as any additive necessary for carrying out the mass, **characterized in that** as binder they use asphaltic hydrocarbons, such as asphaltene, paraffin, olefins, naphthenic, aromatic and others, in varying proportions, of hydrocarbon/aggregate, depending on the type of shielding to be obtained, with particle sizes of the corresponding aggregate, depending on whether you intend to obtain material in mass, brick, or brick strips.

2. ^{a}.- Material for absorption and attenuation of radiations according to claim 1, **characterized in that** when said material is specifically intended for neutron shielding, is used Colemanite as aggregate, and this is based on the following mixture:
| Components | % Volume | % Weight |
|---|---|---|
| Hydrocarbons | 14.5 | 8 |
| Colemanite | 85.5 | 92 |
Percentages can vary in a magnitude of the order of 15%, both in positive sense and in negative sense.

3. ^{a}.- Material for absorption and attenuation of radiations, radiations according to claim 1, **characterized in that** when said product relates to X-ray shielding, is used Barite as aggregate, and this is based on the following mixture:
| Components | % Volume | % Weight |
|---|---|---|
| Hydrocarbons | 14.8 | 4.13 |
| Barite | 85.52 | 95.87 |
Percentages can vary in a magnitude of the order of 15%, both in positive sense and in negative sense.

4. ^{a}.- Material for absorption and attenuation of radiations, according to claim 1, **characterized in that** when said product refers to high energy photons shielding, Magnetite, Hematite and/or steel shot is used, and this on the basis of the following mixture:
| Components | % Volume | % Weight |
|---|---|---|
| Hydrocarbons | 14.47 | 3.5 |
| Magnetite, (*) | 85.53 | 96.5 |
| | | |
|---|---|---|
| (*) Hematite, Steel shot. In the case of the steel shot, since it has more density than Magnetite and/or Hematite, the % by weight in the sample will be modified based on its participation in the same, maintaining the % by volume expressed. | | |
Percentages can vary in a magnitude of the order of 15%, both in positive sense and in negative sense.

5. ^{a}.- Material for absorption and attenuation of radiations, according to claim 1, **characterized in that** faced to the eventual presence of trapped air in the mixture composition, a "filler" of the same type than the main aggregate of the composition is added.

6. ^{a}.- Material for absorption and attenuation of radiations, according to claim 5, **characterized in that** said "filler" participates in a percentage comprised within 1 and 15 % of the total weight of the aggregate used.

7. ^{a}.- Material for absorption and attenuation of radiations, according to claim 1, **characterized in that** faced to the eventual presence of trapped air in the mixture composition, Portland cement is added in a percentage lower than the 10 % of the total weight of the aggregate used.
